# EUROPEAN PATENT SPECIFICATION

(11) **EP 1 696 143 B1**
(45) Date of publication and mention of the grant of the patent: **11.08.2010**
(21) Application number: 06003737.1
(22) Date of filing: 23.02.2006
(51) Int. Cl.: F16C 33/38

(54) **Double split bearing**
Doppelt geteiltes Lager
Palier fendu double

(30) Priority: 25.02.2005 JP 2005049968
(43) Date of publication of application: 30.08.2006
(73) Proprietor: JTEKT CORPORATION, Chuo-ku Osaka-shi Osaka 542-8502 (JP)
(72) Inventor: Ochi, Shinya, Chuo-ku,Osaka-shi, Osaka 542-8502 (JP)
(74) Representative: Schaeberle, Steffen

(56) References cited:
- DE-A1- 3 920 689
- DE-U1- 20 306 899
- FR-A- 501 092
- JP-A- 59 013 123

## Description

### BACKGROUND OF THE INVENTION

The present invention is related to a double split bearing that rotatably supports a crankshaft and a cam shaft of an engine, for example.

For example, as to a bearing for supporting a crankshaft of.an engine, due to the structural limitation, the bearing is split into two pieces and is interposed between semicircle recess portions opposed to a cylinder block and a crankcase which are housing, and a support shaft portion of the crank shaft. Such a prior art bearing is known from JP 59013123 A.
To assemble such a double split bearing into the housing, since precision of the housing is not high as compared with the double split bearing, in the case that half outer race pieces which constitute an outer race of the double split bearing is to be assembled to the recessed portion of the housing, displacement error in the radial direction may occur at parting surfaces thereof. Thus, a step (for example, several micro meters to several tens of micro meters) occurs at an inner surface (raceway surface) of the parting surfaces, which causes vibration and noise and crack which leads early breakage at the time rollers roll in accordance with rotation of the crank shaft.

To solve the problem, Japanese Examined Patent Publication S63-29129 proposes to provide a groove having V shape at the raceway surface of the split races over the entire length in an axial direction. Since the V shape groove has a chamfering effect, sharp edge is prevented to be formed even if the step is formed at the parting surfaces.

Japanese Utility Publication H1-102514 proposes to form a flat relief surface at an outer surface portion of an inner race, so that a load of rollers becomes zero when the rollers roll on the split surfaces.

In the split bearing disclosed in S63-29129B, although the formation of the sharp edge is suppressed by forming the V shape groove on the raceway surface of the split races, since the V shape groove still exist on the raceway surface even if the formation of the sharp edge is suppressed, vibration and noise due to the rolling of the roller cannot sufficiently suppressed and the breakage of the roller cannot prevented.

As to the double split bearing disclosed in JP1-102514U, although the measurement for the split surface of the inner race has been tanked, a measurement for the split surface of the outer race is not taken. Thus, if the step portion at the split surfaces occurs due to the displacement error of the half outer race pieces in the radial direction, life period of the bearing is shorten due to the occurrence of the vibration and noise and the breakage of the rollers.

### SUMMARY OF THE INVENTION

To solve the above problem, an object of the present invention is to provide a double split bearing having a structure in which rollers do not contact a step portion which may occurs at parting surfaces of half outer race pieces constituting an outer race due to a displacement error in a radial direction of the half outer race pieces, thereby the occurrence of the vibration and noise and the breakage of the roller is eliminated and a long life period is realized.
The double split bearing according to the present invention comprises:
a pair of half outer race pieces, each of which include a parting surface and includes an inclined surface that is radially and outwardly expanded from an inner periphery surface thereof toward the parting surface;
a plurality of rollers arranged at the inner periphery surfaces of the half outer race pieces;
a pair of half cage pieces arranged at the inner periphery surfaces of the half outer race pieces, each of which is provided with a plurality of pockets that accommodate the rollers and include roller retainers for restricting a displacement amount of the rollers in a radial direction,
wherein the roller retainers are formed at an outer periphery of the pockets so as to satisfy condition A > B where A represent a height from a start point of the inclined surfaces provided at the parting surfaces of the half outer races pieces to an end point of the parting surfaces and B represent a projecting amount of the roller from the outer periphery of the cage.

According to the double split bearing of the invention, since the rollers do not collide with the V shape groove provided at the parting surfaces of the half outer races, vibration and noise do not occur and the rollers are not damaged, thereby long life period can be realized.

### BRIEF DESCRIPTION OF THE DRAWINGS

Fig. 1 is an explanatory drawing showing a state in which a double split bearing according to an embodiment of the present invention is installed in a housing of an engine.
Fig. 2 is an enlarged view showing a main portion of the double split bearing shown in Fig. 1.
Fig. 3 is an explanatory drawing showing an effect of the present invention.
Fig. 4 is an explanatory drawing showing an effect of a general double split bearing.

### DETAILED DESCRIPTION OF PREFERRED EMBODIMENTS

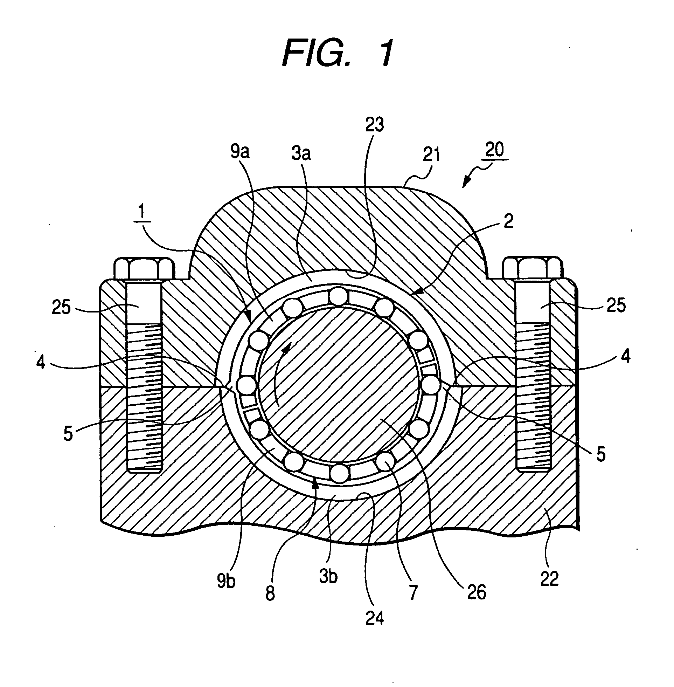

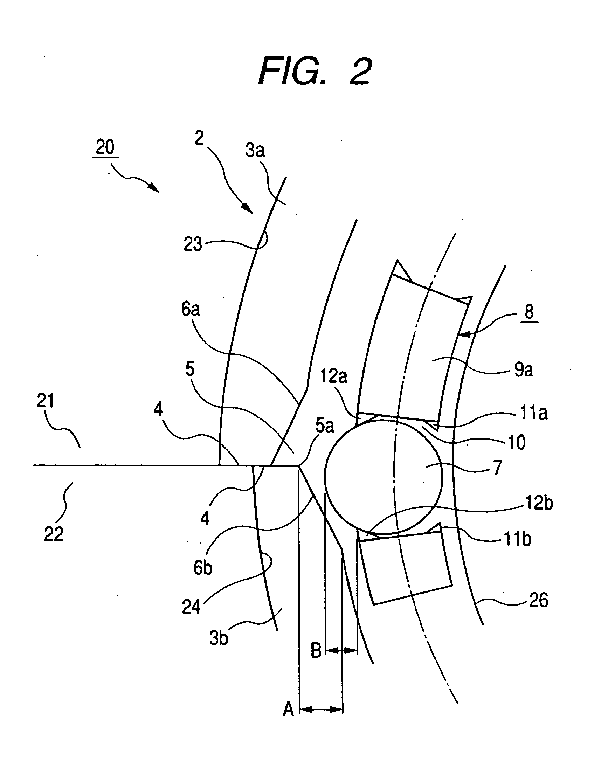

Fig. 1 is an explanatory drawing showing a state in which a double split bearing according to an embodiment of the present invention is installed in a housing of an engine. Fig. 2 is an enlarged view showing a main portion of the double split bearing shown in Fig. 1. Incidentally, a part of drawing is emphasized to make the explanation of the present invention clear.

As shown in Figs. 1 and 2, a reference number 21 denotes a cylinder block that constitutes a housing 20 of an engine, a reference number 22 denotes a crankcase coupled integrally with the cylinder block 21. Semicircle recess 23, 24 are formed on the cylinder block 21 and the crankcase 22, respectively, so as to be opposed to each other. A reference number 25 denotes a fixing bolt for fixing the cylinder block 21 to the crankcase 22. A reference numeral 26 is a support shaft of a crankshaft.

A reference number 1 denotes a double split bearing according to the present invention which comprises an outer race 2, a cage 8 and rollers 7 held by the cage. The outer race includes half outer race pieces 3a, 3b which are respectively fitted to the recess portions 22, 24 of the cylinder block 21 and the crankcase 22, and have parting surfaces 4. When parting surfaces 4 of the half outer race pieces 3a, 3b are abutted to each other, the half outer race pieces 3a, 3b form a circle. The cage 8 includes half cage pieces 9a, 9b arranged at an outer periphery of the support shaft 26 of the crankshaft.

As shown in Fig. 2, the half outer race pieces 3a, 3b constituting the outer race 2 are formed with inclined surfaces 6, 6b which are expanded and inclined radially and outwardly toward the parting surfaces 4 from the inner surfaces thereof (raceway surfaces) over entire length in the axial direction. When the parting surfaces 4 abutted to each other, substantially V-shape groove 5 is formed by the opposed inclined surfaces 6a, 6b. Incidentally, the outer race pieces 3a, 3b are formed with high hardness (for example, Hv550 or higher) by induction quenching, carburizing treatment, nitriding treatment, etc.

The cage 8 is provided with a plurality of pockets 10 for accommodating the roller 7 at a predetermined interval. Inner roller retainers 11a, 11b and outer roller retainers 12a, 12b for restricting movement of the rollers 7 are provided at the inner side and the outer side of both side walls of the pockets 10.

To assemble the double split bearing 1 into the housing 20 and support the support shaft 26 of the crankshaft, firstly, the cylinder block is put up side down to orient the recess portion 23 upward, and the half outer race piece 3a and the half cage piece 9a are assembled into the recess portion 23, and the support shaft 26 of the crankshaft is put on it. Next, the half cage piece 9b and the half outer race piece 3b are assembled to the support shaft 26, and the crankcase 22 is mounted thereon so that the recess portion 24 is fitted to the outer race 3b.

With this assembly, the parting surfaces 4 of the upper and lower half outer race pieces are abutted to each other. However, if center portions of the recess portions 23, 24 of the cylinder block 21 and the crankcase 22 are slightly displaced from each other, displacement error in the radial direction occurs at the parting surfaces 4 of the half outer race pieces 3a, 3b fitted to the recess portions 23, 24, thereby a step portion 5a occurs between them.
In this state, as shown in Fig. 1, the cylinder block 21 and the crankcase 22 are integrally fixed by screwing the fixing bolt 25.

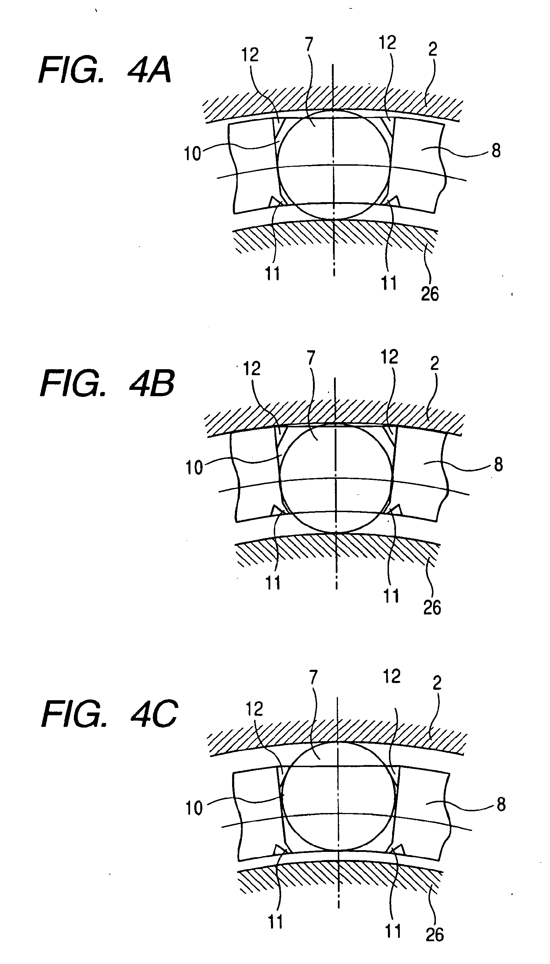

Next, effect of the general rollers 7 accommodated in the pockets 10 of the cage 8 will be described with reference to Figs. 4A to 4C.
Fig. 4A shows a state that the roller rolls while contacting with both raceway surfaces of the outer race 2 and the support shaft 26 of the crankshaft (or inner race) . In this state, the roller 7 is positioned at substantially center portion of the pocket 10. Fig. 4Bb shows a state that little clearance exists between the cage 8 and the outer race 2, and clearance exists between the cage 8 and the support shaft 26. In this state, the roller 7 moves toward the center portion and abuts against the support shaft 26. Fig. 4C shows a state that a clearance between the cage 8 and the support shaft 26 is small, and a clearance exists between the cage 8 and the outer race 2. In this state, the roller 7 is projected from the pocket 10 by centrifugal force generated by the rotation of the cage 8, and abutted against the raceway surface of the outer race 2. At this time, a projecting amount (displacement amount) of the roller 7 is restricted by the roller retainers 12.

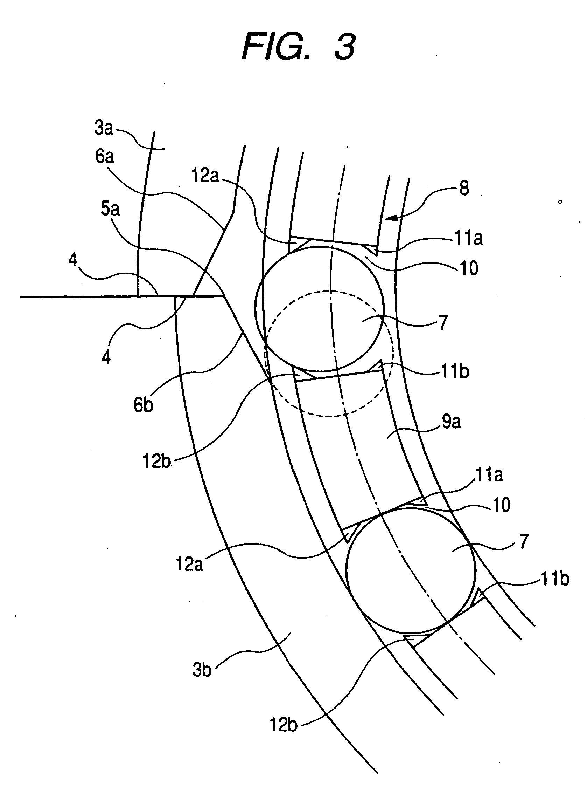

As described above, clearances between the cage 8 and the outer race 2 and between the cage 8 and the support shaft 26 always vary in response to the rotation of the support shaft 26, and the rollers 7 move in the radial direction accordingly.
As shown in Fig. 3, when the support shaft 26 rotates in a direction of an arrow as shown in Fig. 1, the cage 8 attached thereto also rotates in the same direction. When the rollers 7 that have contacted the outer race 2 and the support shaft 26 reach the V-shape groove 5 provide at the parting surfaces 4 of the half outer race pieces 3a, 3b, since the clearance between the cage 8 and the outer race 2 become sharply large, the rollers 7 collide with the step portion 5a of the V-shape groove 5. Therefore, as described above, the vibration and noise occur and the rollers 7 are damaged.

According to the present invention, the roller retainers 12a, 12b restrict the projecting amount of the roller. That is, as shown in Fig. 2, the roller retainers 12a, 12b are formed at the outer periphery of the pockets 10 so as to satisfy condition A > B where A represent a height (step) from a start point of the inclined surfaces 6a, 6b provided at the parting surfaces 4 of the half outer race pieces 3a, 3b to an end point of the parting surfaces 4 and B represent a projecting amount of the roller 7 from the outer periphery of the cage 8.

In the arrangement described above, as shown in Fig. 3, when the support shaft 26 rotates in a direction of an arrow as shown in Fig. 1, the cage 8 attached thereto also rotates in the same direction. When the roller 7 that has rolled while contacting the outer race 2 and the support shaft 26 at the upstream side of the V-shape groove 5 rolls toward the V shape groove 5 and reach the inclined surface 6b, the roller 7 is projected by the centrifugal force since the clearance between the outer race 2 and the cage 8 becomes large. However, the projecting amount of the roller is restricted by the roller retainers 12a, 12b to a small amount, the roller 7 moves slight toward the inclined surface 6b and then is separated from the inclined surface 6b without collision with the step 5a. Therefore, vibration and noise do not occur and the roller is not damaged.

As described above, it is described the case in which the double split bearing 1 according to the present invention supports the crankshaft of the engine. However, the present invention is not limited thereto, and can be applied to the bearing for supporting the rotating portion of other devices.
In the above embodiment, the cage 8 is attached to the outer periphery of the support shaft 26 of the crankshaft. However, the inner race may be provided at an inner periphery of the cage 8.

## Claims

1. A double split bearing comprising:
a pair of half outer race pieces (3a,3b), each of which include a parting surface (4) and includes an inclined surface (6a,6b) that is radially and outwardly expanded from an inner periphery surface thereof toward the parting surface (4);
a plurality of rollers (7) arranged at the inner periphery surfaces of the half outer race pieces (3a,3b);
a pair of half cage pieces (9a,9b) arranged at the inner periphery surfaces of the half outer race pieces (3a,3b), each of which is provided with a plurality of pockets (10) that accommodate the rollers (7) and include roller retainers (11a,11b,12a,12b) for restricting a displacement amount of the rollers (7) in a radial direction,
**characterised in that** the roller retainers (11a,11b,12a,12b) are formed at an outer periphery of the pockets (10) so as to satisfy condition A > B where A represents a height from a start point of the inclined surfaces provided at the parting surfaces (4) of the half outer races pieces to an end point of the parting surfaces and B represents a projecting amount of the roller from the outer periphery of the cage.

## Patentansprüche

1. Doppelt geteiltes Lager, umfassend:
ein Paar von halben äußeren Laufringteilen (3a, 3b), von denen jedes eine Teilungsfläche (4) und eine geneigte Fläche (6a, 6b) umfasst, die sich radial und auswärts von einer Innenumfangsfläche davon in Richtung zur Teilungsfläche (4) erstreckt;
eine Vielzahl von Wälzkörpern (7), die an den Innenumfangsflächen der halben äußeren Laufringteile (3a, 3b) angeordnet sind;
ein Paar von halben Käfigteilen (9a, 9b), die an den Innenumfangsflächen der halben äußeren Laufringteile (3a, 3b) angeordnet sind, wobei jedes mit einer Vielzahl von Aussparungen (10) versehen ist, welche die Wälzkörper (7) aufnehmen und Wälzkörperhalteeinrichtungen (11a, 11b, 12a, 12b) umfassen,
um ein Verlagerungsausmaß der Wälzkörper (7) in einer radialen Richtung zu begrenzen,
**dadurch gekennzeichnet, dass** die Wälzkörperhalteeinrichtungen (11a, 11b, 12a, 12b) an einem Außenumfang der Aussparungen (10) derart ausgebildet sind, dass sie eine Bedingung A > B erfüllen, wobei A eine Höhe von einem Startpunkt der geneigten Flächen, die an den Teilflächen (4) der halben äußeren Laufringteile vorgesehen sind, zu einem Endpunkt der Teilflächen bezeichnet und B ein Ausmaß des Vorstehens der Wälzkörper vom Außenumfang des Käfigs bezeichnet.

## Revendications

1. Palier fendu double comprenant :
une paire de demi-pièces de piste externes (3a, 3b), chacune d'elles comporte une surface de séparation (4) et comporte une surface inclinée (6a, 6b) qui s'étend radialement et vers l'extérieur à partir d'une surface périphérique interne de celle-ci vers la surface de séparation (4) ;
une pluralité de rouleaux (7) agencés au niveau des surfaces périphériques internes des demi-pièces de piste externe (3a, 3b) ;
une paire de demi-pièces de cage (9a, 9b) agencées au niveau des surfaces périphériques internes de demi-pièces de piste externes (3a, 3b) ; chacune d'elles comportant une pluralité de poches (10) qui reçoivent les rouleaux (7) et comportent des éléments de retenue de rouleau (11a, 11b, 12a, 12b) afin de limiter une distance de déplacement des rouleaux (7) dans une direction radiale,
**caractérisé en ce que** les éléments de retenue de rouleau (11a, 11b, 12a, 12b) sont formés au niveau d'une périphérie externe des poches (10) de manière à satisfaire la condition A > B, dans laquelle A représente une hauteur depuis un point de départ des surfaces inclinées formé au niveau des surfaces de séparation (4) des demi-pièces de piste externes jusqu'à un point d'extrémité des surfaces de séparation et B représente une distance de saillie du rouleau par rapport à la périphérie externe de la cage.
